# EUROPÄISCHE PATENTSCHRIFT

(11) **EP 0 478 907 B1**
(45) Veröffentlichungstag und Bekanntmachung des Hinweises auf die Patenterteilung: **12.10.1994**
(21) Anmeldenummer: 91112157.2
(22) Anmeldetag: 20.07.1991
(51) Int. Cl.: G05G 25/04, G05G 1/02

(54) **Schiebesteller**
Slide actuator
Commande de coulisse

(30) Priorität: 29.09.1990 DE 4030909
(43) Veröffentlichungstag der Anmeldung: 08.04.1992
(73) Patentinhaber: Preh-Werke GmbH & Co. KG, 97616 Bad Neustadt (DE)
(72) Erfinder: Bauer, Karl-Heinz, W-8740 Bad Neustad/Saale (DE)

(56) Entgegenhaltungen:
- EP-A- 0 331 568
- DE-U- 8 536 130
- DE-U- 8 708 331

## Beschreibung

Die Erfindung betrifft einen Schiebesteller einer Bedieneinrichtung gemäß dem Oberbegriff des Anspruches 1.

Solche Schiebesteller sind in der Technik neben einer Anzahl alternativer Stellmöglichkeiten, wie z.B. Drehsteller, weit verbreitet und daher wohlbekannt. Schiebesteller findet man beispielsweise an Geräten der Unterhaltungselektronik, an elektrischen Haushaltsgeräten, Meßgeräten, Lichtdimmern, wobei sich mittels der Schiebesteller zumeist elektrische Größen von Hand beeinflussen lassen. An Lüftungs- oder Klimaeinrichtungen von Kraftfahrzeugen öffnet oder schließt man mit dem Stellen eines Schiebestellers z.B. eine Luftklappe, wobei bedarfsweise auch Bowdenzüge gestellt werden.

Abhängig von der Art des Einsatzes oder der Umwelt ist es bei Schiebestellern mitunter zweckdienlich, den üblicherweise offenen Stellschlitz durch Dichtmittel zu schließen, um auf diese Weise den Innenbereich eines Schiebestellers gegen von außen eindringende Stoffe, wie Staub, Spritzwasser usw. zu schützen oder um einen Lichtdurchtritt zu vermeiden. In der Praxis findet man solche Dichtmittel unter anderem in der Gestalt von Blenden oder bandartigen Jalousien, die sich mit dem Stellglied bewegen. Es sind auch den Stellschlitz eines Schiebestellers abdeckende Dichtmittel bekannt, die fest verankert sind, wobei das Stellglied des Schiebestellers am Dichtmittel entlanggleitet und es partiell verdrängt. Eine Anordnung mit einem Dichtmittel dieser Art offenbart die DE-U-87 08 331. Dabei überlappen sich zwei gummielastische, mit ihrem Dichtrand gegeneinander gerichtete, fest verankerte Dichtlippen im Mittenbereich des Stellschlitzes. Das Stellglied gleitet bei Betätigung an den Dichträndern entlang und öffnet partiell die Überlappung.

Die im Zusammenhang mit Schiebestellern bekannten Dichtmittel haben ihre spezifischen Vor- und Nachteile z.B. hinsichtlich Materialkosten, Montageaufwand, Platzbedarf, Dichtheit usw., was hier in der Gesamtheit nicht ausführlich erörtert wird. Bei stationär verankerten Dichtmitteln ist allerdings anzumerken, daß eine bürstenartige Ausführung aufwendig und mitunter lichtdurchlässig ist, was bei innenseitig angeordneten Lichtquellen als störend empfunden wird, und daß eine folienartige Ausführung aufgrund ihrer Spannhaltung bzw. Steifheit an den in Stellrichtung liegenden Stirnseiten des Stellgliedes nicht formschlüssig anliegt und größere, undichte Lücken entstehen läßt.

Es ist Aufgabe der Erfindung, einen Schiebesteller der eingangs bezeichneten Art vorzuschlagen, der am Stellschlitz mit einem einfach zu handhabenden, einstückigen Dichtmittel versehen ist, das auch in unmittelbarer Umgebung zum Stellglied den Stellschlitz staub- und lichtdicht verschließt. Der Schiebesteller des Patentanspruches 1 löst mit seinen kennzeichnenden Merkmalen die gestellte Aufgabe. Die Merkmale der weiteren Ansprüche bilden den vorgeschlagenen Schiebesteller vorteilhaft weiter.

Das Dichtmittel des Schiebestellers besteht aus Lamellen und verbindende Wandungen. Durch geeignete Wahl ihres Querschnittes sind die zur Abdichtung des Stellschlitzes beitragenden Lamellen aus gummielastischem Material relativ steif ausgebildet und bei ausreichender Halterung im Schiebesteller entsprechend lagestabil. Sind die Lamellen durch mechanische Einwirkung, z.B. durch das vorbeigleitende Stellglied verformt, streben sie aus eigener Kraft in ihre ursprüngliche Lage zurück. Es sind stets nur die vom Stellglied beaufschlagten Lamellen verformt. Die angrenzenden Lamellen stehen in ihrer normalen Position, sie betten das Stellglied ein und lassen an dessen Stirnseiten in vorteilhafter Weise keine größeren Lücken in Durchdringungsrichtung des Stellschlitzes entstehen. Die Lamellen sind beabstandet, um zu vermeiden, daß sich bei ihrer Verformung durch das Stellglied zum Klemmen neigende Materialanhäufungen ergeben. Benachbarte Lamellen sind mittels einer Wandung brückenartig miteinander verbunden.

Die Wandung hat die Aufgabe, den Raum zwischen benachbarten Lamellen in Durchdringungsrichtung zu verschließen. Die Wandung hat eine nur geringe Wanddicke, um diesem Teil der Dichtlippe eine möglichst große Elastizität zu verleihen. Die weichelastische Wandung folgt den relativ steifen Lamellen in ihre Verformungslage, ohne nennenswert eigene Kräfte zu entfalten; dabei legt sie sich in vorteilhafter Weise formschlüssig an das Stellglied an und läßt Lücken nicht entstehen. Die Wandung stellt das eigentliche Dichtelement der Dichtlippe dar; sie wird von den Lamellen gehalten und geführt. Die Dichtlippe umschließt das Stellglied durch das vorteilhafte Zusammenwirken von Lamellen und Wandung an drei Seiten; die vierte Seite des Stellgliedes liegt am Schlitzrand an. Eine solche Dichtlippe verschließt den Stellschlitz des Schiebestellers gegen Staub usw. in einfacher Weise auch in unmittelbarer Umgebung des Stellgliedes.

Die Dichtlippe kann im Schiebesteller unmittelbar z.B. am Schlitzrand formschlüssig festgelegt sein. Der Dichtlippe kann zum Zweck der Befestigung auch ein zusätzliches Segment angeformt sein, an dem bedarfsweise z.B. eine Bohrung oder eine Nut ausgebildet ist. In einer Ausgestaltung der Erfindung ist ein solches Befestigungssegment durch eine angeformte Längsschiene dargestellt, in welche die Lamellen mit den Stirnflächen einer Seite einmünden. Die Längsschiene stabilisiert so zusätzlich die Anordnung der Lamellen, indem sie die Dichtlippe einseitig versteift. Die elastisch bleibende Gegenseite ist dem Stellglied zugeordnet.

Die Lamellen der Dichtlippe können bezogen auf die Längsrichtung des Stellschlitzes eine schräge Ausrichtung einnehmen, sie können bedarfsweise auch geneigt angeordnet sein. Eine lotrechte, parallele Anordnung der Lamellen gemäß den vorgeschlagenen Ausgestaltungen, ist im Hinblick auf die Hin- und Herbewegung des Stellgliedes vorteilhaft.

Bei einer besonders vorteilhaften Ausgestaltung der Erfindung liegt die Anformstelle der Wandung am innenseitigen, vom Stellschlitz entfernten Lamellenrand. Eine solchermaßen ausgebildete Wandung wölbt sich bei Verformung der Lamellen durch das Stellglied nach außen, insbesondere wenn sie mit einer entsprechenden Falte vorgeformt ist. Die Wandung faltet sich nicht zwischen die Lamellen und trägt so dazu bei, die Materialanhäufung in Höhe des Stellgliedes zu mindern. Der Lamellenabstand kann verringert und die Anzahl der Lamellen erhöht werden.

In einer anderen Ausgestaltung des Schiebestellers, z.B. in einer senkrechten Bedienanordnung zur Klimaeinstellung in einem PKW, ist vorgeschlagen, die Dichtlippe aus Silikon mit einer Härte von ca. 40 Shore anzufertigen, was dem Bediener das Gefühl einer gleitenden Einstellbarkeit vermittelt. Einen ähnlich positiven Einfluß auf die Einstellbarkeit zeigen weitere Ausgestaltungen des Schiebestellers, wobei die Lamellen der Dichtlippe doppelt so dick wie die zugehörige Wandung sind oder wobei die in Stellrichtung liegenden Seiten des Stellgliedes schrägwinkelig gestaltet sind.

Nachfolgend wird ein Ausführungsbeispiel der Erfindung vorgestellt und anhand von Zeichnungen näher erläutert. Die Zeichnungen zeigen in
- Figur 1: in perspektivischer Darstellung die Außenansicht eines Schiebestellers als separierten Ausschnitt einer Bedienanordnung,
- Figur 2: eine detaillierte Darstellung eines Stellschlitzes in vergrößertem Maßstab,
- Figur 3: eine Dichtlippe als Einzelteil,
- Figur 4: eine alternativ zu Figur 3 ausgebildete Dichtlippe als Einzelteil

und in
- Figur 5: einen vergrößerten Ausschnitt aus Figur 1 (V - V) mit Dichtlippe und Stellglied.

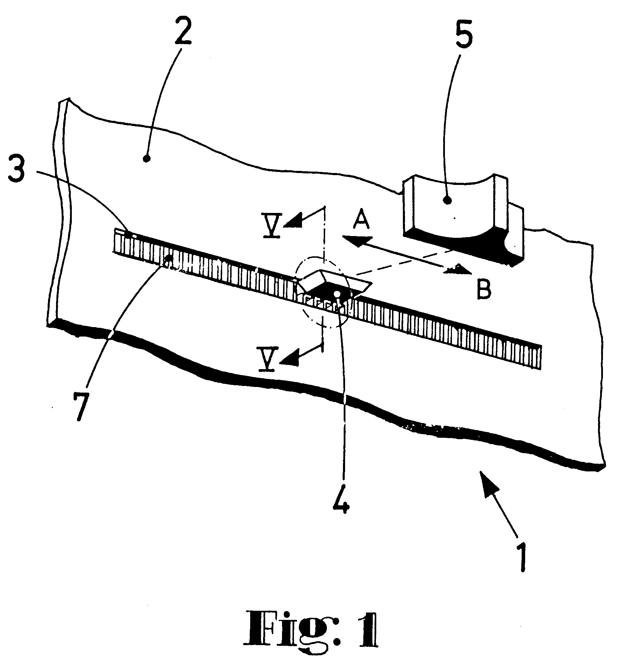

Figur 1 zeigt perspektivisch dargestellt die Außenansicht eines Schiebestellers (1). Dabei ist als Teil einer gedachten, umfassenderen Bedienanordnung ein Ausschnitt der Frontblende (2) zu erkennen. In die Frontblende (2) ist ein Stellschlitz (3) eingearbeitet, dessen Öffnung ein Stellglied (4) des Schiebestellers (1) durchragt. Das Stellglied (4) kann in Stellrichtung **A**, **B** längs des Stellschlitzes (3) bewegt werden. Zur einfacheren Handhabung des Stellvorganges wird auf das Stellglied (4) ein Stellknopf (5) gesteckt und befestigt. Auf der Innenseite (6) des Stellschlitzes (3) verwehrt eine Dichtlippe (7) das Durchdringen von Staub, Licht usw. durch den Stellschlitz (3) hindurch in das Geräteinnere hinein und umgekehrt. An der Dichtlippe (7) ist im Bereich des Stellgliedes (4) das vorausgehende Stellen des Stellgliedes (4) in Stellrichtung **B** erkennbar. Für den Schiebesteller (1) ist es unerheblich, welche Einrichtung im Geräteinneren mit dem Stellglied korrespondiert oder welche mechanische oder physikalische Größe durch seine Betätigung zu beeinflussen ist.

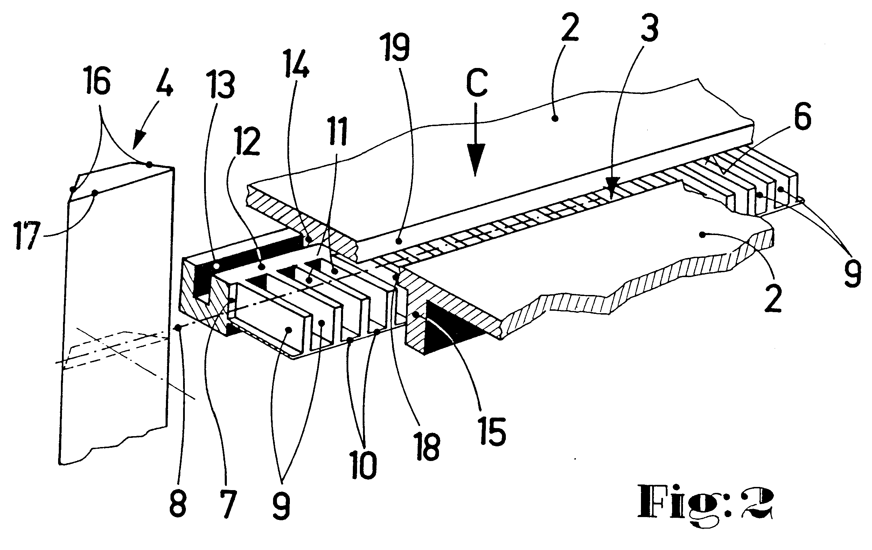

In Figur 2 zeigt ein vergrößerter Ausschnitt des Schiebestellers Einzelheiten hinsichtlich Gestaltung und Zuordnung von Stellschlitz (3), Dichtlippe (7) und Stellglied (4). Dem Stellschlitz (3) der Frontblende (2) ist an seiner Innenseite (6) eine Dichtlippe (7) als Dichtmittel zugeordnet. Die Längsrichtung des Stellschlitzes (3) ist durch die Längsachse (8) erkenntlich. Die Dichtlippe (7) besteht im wesentlichen aus einer Anreihung von Lamellen (9). Die Lamellen (9) sind durch brückenartig gestaltete Wandungen (10) verbunden. Die beabstandet angeordneten Lamellen (9) liegen gegenseitig parallel in lotrechten Ebenen zur Längsachse (8). Grundsätzlich sind auch schrägwinkelig zur Längsachse ausgerichtete Lamellen denkbar. Die Wandung (10) verschließt den Zwischenraum (11) der Lamellen (9) in Durchdringungsrichtung **C**. Die Wandungen (10) sind in Figur 2 insgesamt in paralleler Ausrichtung zur Frontblende (2) gezeigt. Sie könnten jedoch ohne Nachteil für ihre verschließende Funktion auch zur Frontblende (2) geneigt ausgerichtet sein oder unterschiedlich beabstandet. Den Lamellen (9) und Wandungen (10) ist einseitig eine Schiene (12) angeformt. Die Schiene (12) hat eine Längsnut (13), die mit einem ersten Steg (14) der Frontblende (2) zusammenwirkt. Das Zusammenwirken hält die Dichtlippe (7) parallel zur Längsachse (8) ausgerichtet ortsfest. Der Raum an der Innenseite (6) des Stellschlitzes (3) wird durch einen zweiten Steg (15) der Frontblende (2) begrenzt. Vom Stellglied (4) erkennt man das dem Stellknopf (5) zugewandte Ende. Das Stellglied (4) ist im Stellschlitz (3) entlang der Längsachse (8) stellbar. Schrägwinkelig ausgebildete Stirnseiten (16) geben dem Stellglied einen trapezförmigen Querschnitt. Innerhalb des Stellschlitzes (3) positioniert liegt das Stellglied (4) mit seiner größeren Längsseite (17) am der Schiene (12) gegenüberstehenden Rand (18) der Frontblende (2) schlüssig an; zum Gegenrand (19) hin ist das Stellglied im Normalfall beabstandet. Das Stellglied (4) befindet sich hinsichtlich des Querschnittes des Stellschlitzes (3) nicht mittig.

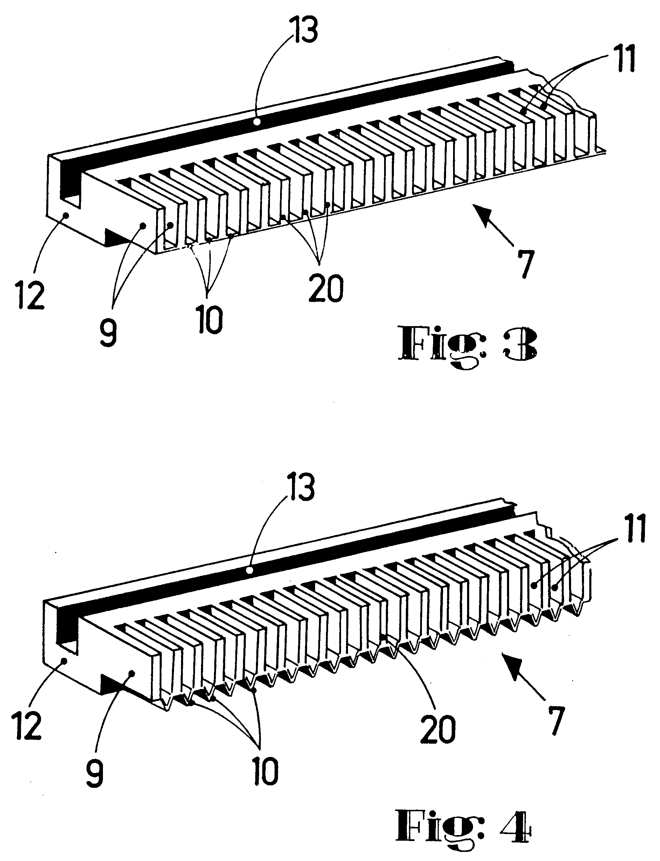

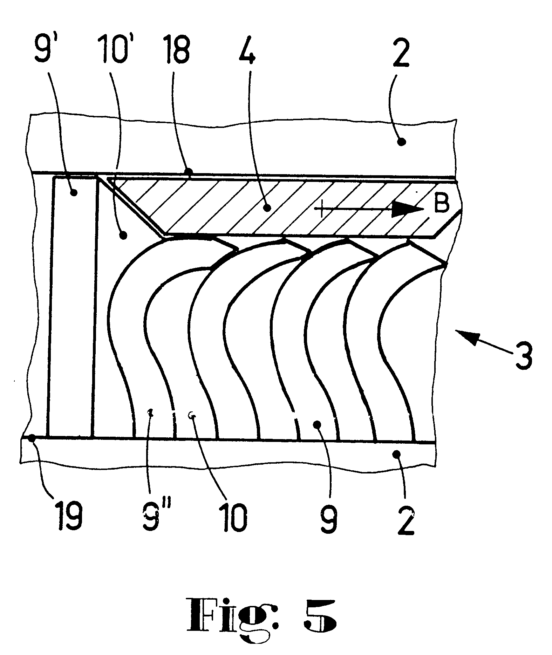

Endstücke alternativ geformter Dichtlippen (7) zeigen Figur 3 und Figur 4. Die Wandung (10) in Figur 3 ist ebenflächig; in Figur 4 hat die Wandung (10) eine Faltform. Die Wandungen (10) sind am gegenüberstehenden schlitzentfernten Lamellenrand (20) angeformt; die Wandung (10) behindert nicht die gegenseitige Annäherung der Lamellen (9), sie wölbt sich nicht in den Zwischenraum (11). Die Lamellen (9) sind etwa um den Faktor drei dicker als die Wandung (10). Figur 5 zeigt in einem stark vergrößerten Ausschnitt das Verhalten von Lamellen (9) und Wandungen (10) im Zusammenhang mit dem trapezförmig gestalteten Stellglied (4).

Es ist zu erkennen, daß das Stellglied (4) von den Teilen (9, 10) der Dichtlippe (7) formschlüssig eingebettet ist. Die Lamellen (9) in Höhe des Stellgliedes (4) sind verformt und legen sich gegenseitig an. Die Wandungen (10) sollen bei einem solchen Aneinanderlegen der Lamellen (9) nicht störend dazwischenliegen. Das Stellglied ist zuvor in Stellrichtung **B** gestellt worden; dies ist aus der Lage der Lamellen (9) erkennbar. Die benachbart zum Stellglied (4) angeordnete Lamelle (9′) ist aufgrund ihrer relativen Steifheit bereits wieder in ihre normale, unbelastete Position nach dem Vorbeigleiten des Stellgliedes zurückgeschwenkt. Die anschließende, elastische Wandung (10′) folgt einerseits dieser unbelasteten Lamelle (9′) und andererseits der verformten Lamelle (9˝). Dabei umschließt die Wandung (10′) die Kontur des Stellgliedes (4) an dessen Stirnseite (16) und läßt in Durchdringungsrichtung **C** keine Lücken im Stellschlitz entstehen.

Bei vertikaler Frontblende (2) mit horizontal verlaufendem Stellschlitz (3) ist es hinsichtlich der Wirkung der Dichtlippe (7) von Vorteil, den mit der Längsseite (17) des Stellgliedes (4) zusammenwirkenden Rand (18) obenliegend und den Gegenrand (19) untenliegend anzuordnen.

### Bezugszeichenliste

- 1: Schiebesteller
- 2: Frontblende
- 3: Stellschlitz
- 4: Stellglied
- 5: Stellknopf
- 6: Innenseite
- 7: Dichtlippe
- 8: Längsachse
- 9: Lamelle
- 10: Wandung
- 11: Zwischenraum
- 12: Schiene
- 13: Längsnut
- 14: Steg
- 15: Steg
- 16: Stirnseite
- 17: Längsseite
- 18: Rand
- 19: Gegenrand
- 20: Lamellenrand

- **A,B**: Stellrichtung
- **C**: Durchdringungsrichtung

## Patentansprüche

1. Schiebesteller einer Bedienanordnung mit einem Stellschlitz (3), dem gegen ungewolltes Durchdringen von z.B. Staub, Licht oder Nässe eine gummielastische Dichtlippe (7) an seiner einem Bediener abgewandten Innenseite zugeordnet ist,
und mit einem Stellglied (4), das den Stellschlitz (3) durchdringt und längs diesem stellbar ist,
dadurch gekennzeichnet,
daß die einstückig ausgebildete Dichtlippe (7) sich aus einer Anreihung von quer zur Längsachse (8) des Stellschlitzes (3) ausgerichteten, gegenseitig beabstandeten Lamellen (9) bildet und daß die jeweils benachbarten Lamellen (9) der Dichtlippe (7) brückenartig durch eine den Zwischenraum (11) in Durchdringungsrichtung **C** des Stellschlitzes (3) schließende Wandung (10) verbunden sind und die Lamellen (9) dicker ausgebildet sind als die Wandungen (10).

2. Schiebesteller nach Anspruch 1,
dadurch gekennzeichnet,
daß den Lamellen (9) und Wandungen (10) einseitig eine gemeinsame Schiene (12) angeformt ist, die seitlich zum Stellschlitz (3) verläuft und sich an dessen Längsachse (8) ausrichtet.

3. Schiebesteller nach Anspruch 1 oder 2,
dadurch gekennzeichnet,
daß die Lamellen (9) hinsichtlich ihrer Querlage im Stellschlitz (3) senkrecht zur Längsachse (8) ausgerichtet sind.

4. Schiebesteller nach einem der vorstehenden Ansprüche,
dadurch gekennzeichnet,
daß die Lamellen (9) in Durchdringungsrichtung **C** senkrecht zur Ebene des Stellschlitzes (3) angeordnet sind.

5. Schiebesteller nach einem der vorstehenden Ansprüche,
dadurch gekennzeichnet,
daß die Lamellen (9) gegenseitig eine parallele Position einnehmen.

6. Schiebesteller nach einem der vorstehenden Ansprüche,
dadurch gekennzeichnet,
daß die Wandung (10) am schlitzentfernten Lamellenrand (20) angeformt ist.

7. Schiebesteller nach einem der vorstehenden Ansprüche,
dadurch gekennzeichnet,
daß die Wandung (10) faltenförmig ist.

8. Schiebesteller nach einem der vorstehenden Ansprüche,
dadurch gekennzeichnet,
daß die Dicke der Lamelle (9) zur Dicke der Wandung (10) ein Verhältnis von zumindest 2 : 1 einnimmt.

9. Schiebesteller nach einem der vorstehenden Ansprüche,
dadurch gekennzeichnet,
daß die Dichtlippe (7) aus Silikon mit etwa 40 Shore Härte erstellt ist.

10. Schiebesteller nach einem der vorstehenden Ansprüche,
dadurch gekennzeichnet,
daß die in Stellrichtung **A**, **B** liegenden Stirnseiten (16) des Stellgliedes (4) zumindest im Bereich der Dichtlippe (7) schrägwinkelig gestaltet sind.

## Claims

1. Slide actuator for a control device having an adjustment slot (3) to which there is assigned, on its inner side remote from the operator, a resilient rubber sealing lip (7) which seals against the accidental penetration of e.g. dust, light or moisture, and having an adjustment member (4) which passes through the adjustment slot (3) and can be adjusted along it,
characterised in that the sealing lip (7) constructed in one piece is formed from a series of lamellae (9) aligned transversely to the longitudinal axis (8) of the adjustment slot (3) and mutually spaced apart, and in that the respectively adjacent lamellae (9) of the sealing lip (7) are connected in a bridge form by a wall (10) sealing the intermediate area (11) in the direction of penetration C of the adjustment slot (3), and the lamellae (9) are of thicker construction than the wall (10).

2. Slide actuator according to claim 1,
characterised in that a common bar (12) is formed on the lamellae (9) and walls (10) on one side, extends laterally to the adjustment slot (3) and is aligned with its longitudinal axis (8).

3. Slide actuator according to claim 1 or 2,
characterised in that the lamellae (9) are aligned perpendicularly to the longitudinal axis (8) with respect to their transverse position in the adjustment slot (3).

4. Slide actuator according to one of the preceding claims,
characterised in that in the direction of penetration C the lamellae (9) are arranged perpendicularly to the plane of the adjustment slot (3).

5. Slide actuator according to one of the preceding claims,
characterised in that the lamellae (9) occupy a parallel position with respect to each other.

6. Slide actuator according to one of the preceding claims,
characterised in that the wall (10) is formed on the edge of the lamellae (20) remote from the slot.

7. Slide actuator according to one of the preceding claims,
characterised in that the wall (10) is fold-shaped.

8. Slide actuator according to one of the preceding claims,
characterised in that the thickness of the lamella (9) to the thickness of the wall (10) assumes a ratio of at least 2 : 1.

9. Slide actuator according to one of the preceding claims,
characterised in that the sealing lip (7) is made of silicone of a hardness of about 40 Shore.

10. Slide actuator according to one of the preceding claims,
characterised in that the end faces (16) of the adjustment member (4), lying in the adjustment direction A, B, are at an inclined angle at least in the region of the sealing lip (7).

## Revendications

1. Dispositif à curseur pour le réglage d'un dispositif de commande comportant une fente de réglage (3) à laquelle est affectée, du côté situé à l'opposé d'un utilisateur, une lèvre d'étanchéité (7) élastique comme du caoutchouc destinée à empêcher le passage indésiré, par exemple, de la poussière, de la lumière, ou de l'humidité, et un curseur (4) qui traverse la lèvre d'étanchéité (3) et qui peut être déplacé le long de celle-ci,
caractérisé en ce que
la lèvre d'étanchéité (7) réalisée en une seule pièce se compose d'une rangée de lamelles (9) situées à une certaine distance les unes des autres, orientées transversalement à l'axe longitudinal (8) de la fente (3) de réglage, en ce que les lamelles voisines (9) sont reliées par une cloison (10) fermant à la façon d'un pont l'espace intermédiaire (11) dans la direction de passage (C) de la fente de réglage (3), et en ce que les lamelles (9) sont plus épaisses que les cloisons (10).

2. Dispositif de réglage à curseur selon la revendication 1,
caractérisé en ce que
un rail commun (12) est formé d'un seul côté sur les lamelles (9) et les cloisons (10), lequel rail s'étend sur le côté de la fente de réglage (3) et est orienté le long de l'axe longitudinal (8) de celle-ci.

3. Dispositif de réglage à curseur selon la revendication 1 ou 2,
caractérisé en ce que
les lamelles (9) sont orientées, en ce qui concerne leur position transversale dans la fente de réglage (3), perpendiculairement à l'axe longitudinal (8).

4. Dispositif de réglage à curseur selon l'une des revendications précédentes,
caractérisé en ce que
les lamelles (9) sont disposées dans la direction de passage C perpendiculairement au plan de la fente de réglage (3).

5. Dispositif de réglage à curseur selon l'une des revendications précédentes,
caractérisé en ce que
les lamelles (9) prennent les unes par rapport aux autres une position parallèle.

6. Dispositif de réglage selon l'une des revendications précédentes,
caractérisé en ce que
la cloison (10) est issue du bord (20) des lamelles situé à l'opposé de la fente.

7. Dispositif de réglage à curseur selon l'une des revendications précédentes,
caractérisé en ce que
la cloison (10) a une forme froncée.

8. Dispositif de réglage à curseur selon l'une des revendications précédentes,
caractérisé en ce que
l'épaisseur de la lamelle (9) a un rapport d'au moins 1 à 2 avec l'épaisseur de la cloison (10).

9. Dispositif de réglage à curseur selon l'une des revendications précédentes,
caractérisé en ce que
la lèvre d'étanchéité (7) est fabriquée en une silicone d'une dureté Shore d'environ 40.

10. Dispositif de réglage à curseur selon l'une des revendications précédentes,
caractérisé en ce que
les côtés frontaux (16) du curseur (4) situés dans la direction de réglage A, B sont biseautés au moins dans la zone de la lèvre d'étanchéité (7).
